# EUROPEAN PATENT SPECIFICATION

(11) **EP 4 071 396 B1**
(45) Date of publication and mention of the grant of the patent: **28.02.2024**
(21) Application number: 22166675.3
(22) Date of filing: 05.04.2022
(51) Int. Cl.: F16L 39/06, B23Q 1/00, B26D 3/16, B26D 5/12, B21C 37/15, B23D 21/00

(54) **SWIVEL JOINT DEVICE WITH SEALED DUCT**
DREHGELENKVORRICHTUNG MIT ABGEDICHTETEM KANAL
DISPOSITIF À ARTICULATION PIVOTANTE DOTÉ D'UN CONDUIT HERMÉTIQUE

(30) Priority: 07.04.2021 IT 202100008702
(43) Date of publication of application: 12.10.2022
(73) Proprietor: Tecno System S.r.l., 44013 Consandolo (FE) (IT)
(72) Inventor: MANTOVANI, Daniele, 44011 BENVIGNANTE (IT)
(74) Representative: Negrini, Elena

(56) References cited:
- IT-A1- PD20 120 319
- JP-A- 2006 095 616
- US-A- 4 738 187
- US-A- 5 718 458

## Description

The present invention relates to the technical field concerning mechanical and pneumatic or hydraulic sectors and it refers to a swivel joint device with a sealed duct fit for allowing the mutual axial rotation of its members ensuring a sealed and pneumatic connection between them even not axial, particularly but not exclusively suitable for devices for processing or cutting pipes, rolls, cables and elements with longitudinal development in general or other applications.

Joints are known, for example of the type having an axial passage channel for objects to be processed or for separate flows, provided with a non-axial duct and having an external member assigned to be fixed to a structure and an internal member assigned for the rotating support of pneumatically operated tools where the non-axial duct allows the tools to be pneumatically fed thereto. This non-axial supply duct has a stationary end fixed to the external member and a rotating end fixed to a protruding flange of the internal member assigned to support the pneumatic tools.

A disadvantage of these known devices consists in the fact that they have strong rotational friction with consequent wear, high energy consumption and rotation blocks or they have excessive pressure drops caused by leaks and pneumatic resistances which affect the operation of said pneumatic tools.

Prior document N. US 5 718 458 discloses: a swivel joint device comprising an external member provided with a respective first connection for a pressurized fluid and one internal member provided with a respective second connection for the pressurized fluid. The device comprises a set of rotation members, having a common rotation axis and interposed between the internal and external members for free rotation around the rotation axis of one of the members with respect to the other. The internal member has a ring element protruding outwards and peripherally provided with an annular groove facing the internal outlet of the first connection of the external member, the ring element is laterally provided with right and left annulus shoulders and its annular groove is in fluid communication with a set of supply ducts of the internal element which connect such annular groove to the at least one second connection of the internal member.

An object of the present invention is to propose a swivel joint device with a sealed duct which simultaneously provides low resistance to rotation and an excellent seal for a fluid under pressure.

A further object is to propose a device which allows to use a completely solid or drum-type internal member with an axial passage for materials or flows distinct from the feed one. Another purpose is to propose a low maintenance device.

A further object is to propose a device whose seals, possibly worn, can be easily restored with simple working or replaced.

A further object is to propose a device particularly but not exclusively suitable for pipes cutters or for equipment for processing other products with high longitudinal development such as data cables or of the mechanical type, rolls, and the like.

The present invention is defined by a swivel joint device according to claim 1. Further preferred embodiments are defined in the dependent claims.

The characteristics of the invention are highlighted below with particular reference to the accompanying drawings in which:
- Figure 1 illustrates a front view of the swivel joint device with sealed duct object of the present invention;
- Figure 2 illustrates a section view along the plane II - II of Figure 1;
- Figure 3 illustrates a section view along the plane III - III of Figure 1;
- Figure 4 illustrates a sectional view along the radius IV of Figure 1;
- Figures 5a, 5b and 6 illustrate enlarged details of Figures 2 and 3;
- Figure 7 illustrates an axonometric and enlarged view of a sealing assembly of the device of Figure 2;
- Figure 8 illustrates a projecting flange of an internal member of the device of Figure 1 provided with a set of pneumatically operated tools for using the device for cutting pipes.

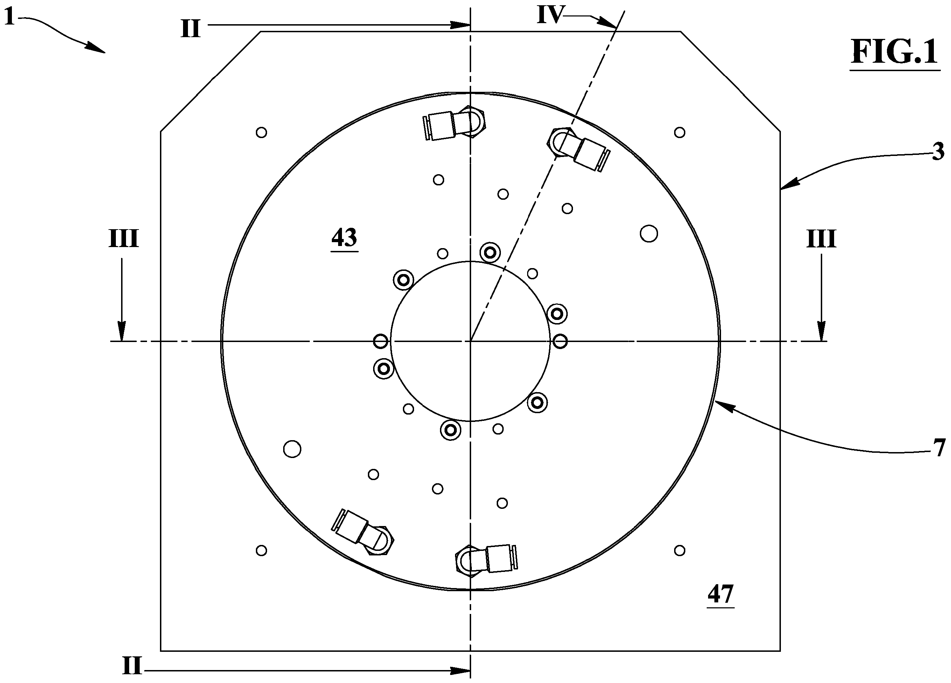

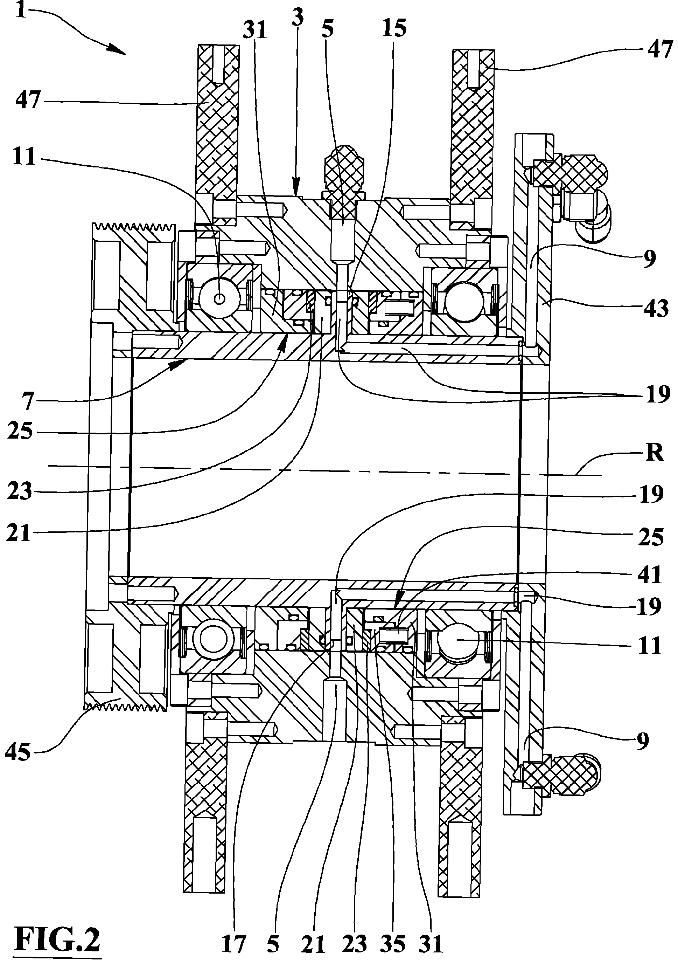

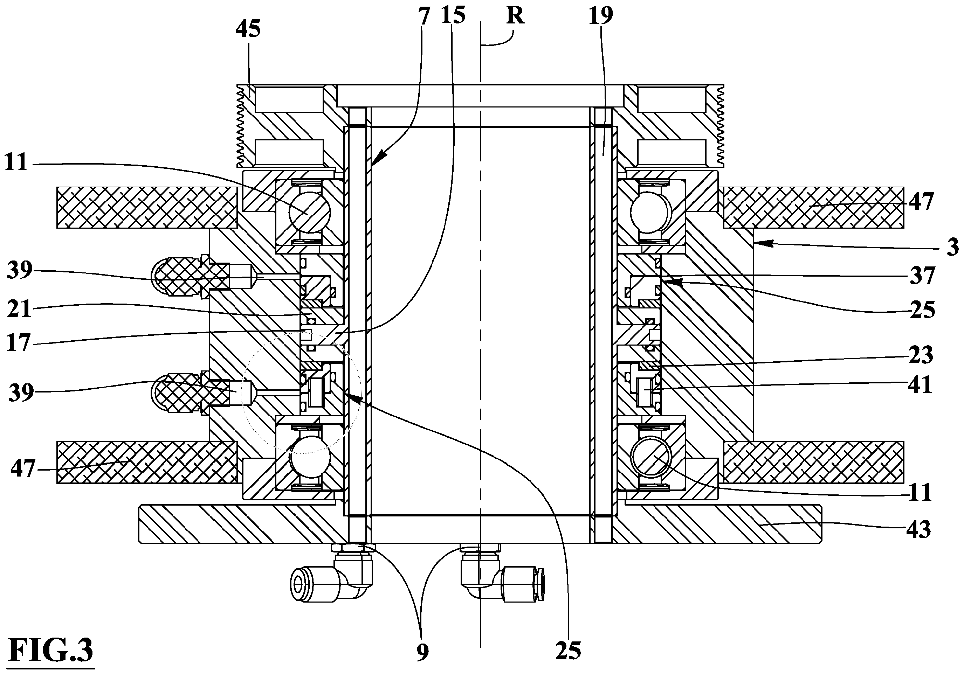

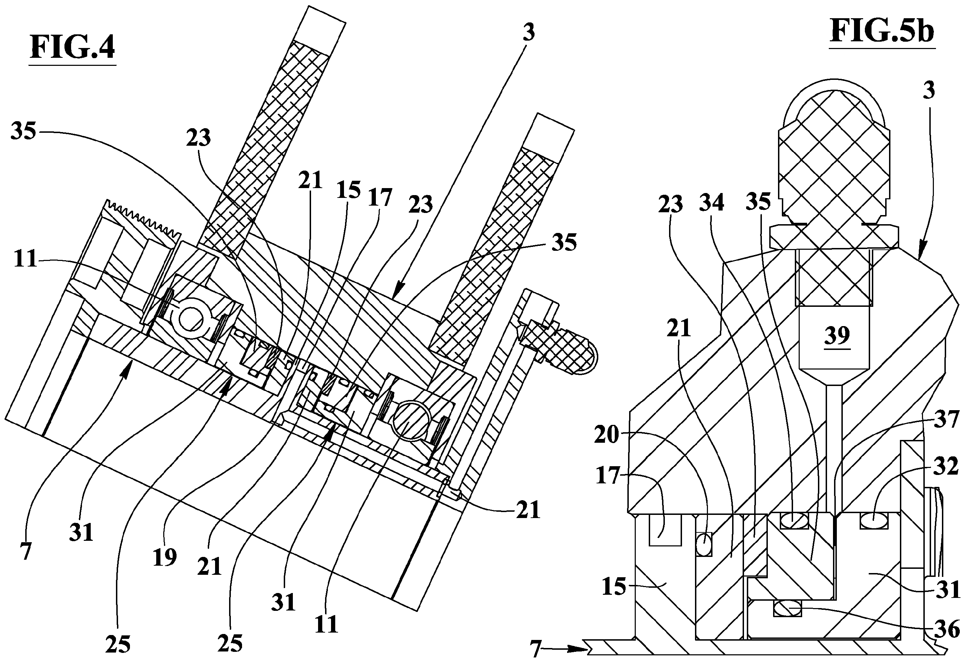

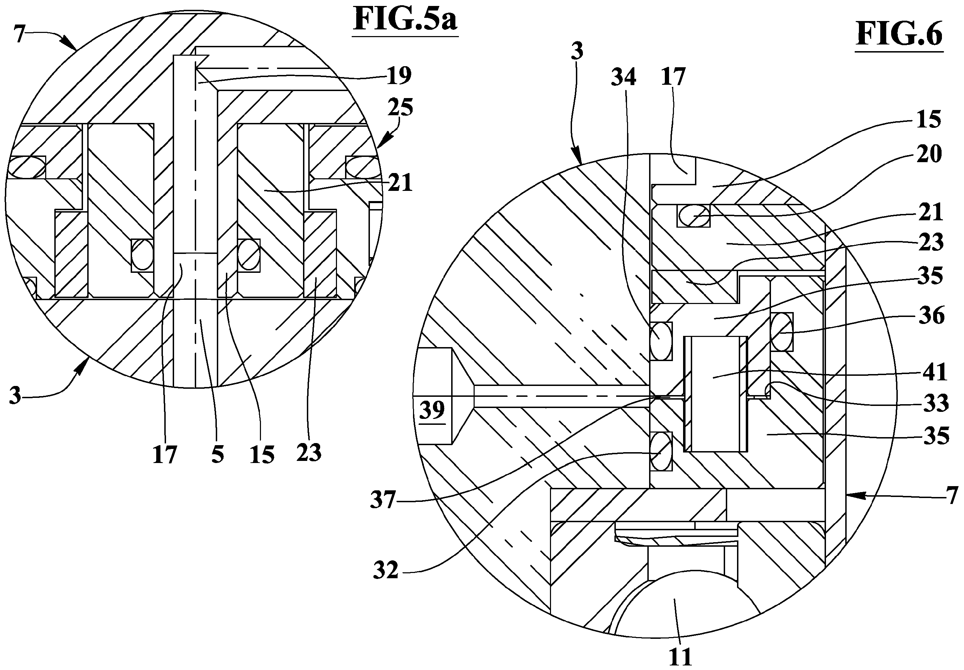

With reference to Figures 1-7, numeral 1 indicates the swivel joint device with sealed duct object of the present invention comprising at least one external member 3 provided of at least a respective first connection 5 for a pressurized fluid and an internal member 7 provided of at least a respective second connection 9 for the pressurized fluid, for example consisting of air, another gas mixture or a pure gas.

At least the median portion of the internal member 7 is internal to the external member 3 while one or both ends of the internal member 7 can protrude from the external member 3, for example as illustrated in the figures.

The external member 3 comprises a body, for example of metallic material, in the shape of a cylindrical shaped wall with a wall thickness comprised between about one sixth and one half of the longitudinal development of the body. Such body of the external member can comprise a plurality of first connections 5 each of which starts from the median portion of the external cylindrical face of the body, where it bears a connector for a tube for the pressurized fluid and extends radially through the wall of the body until it flows into the internal cylindrical face of the body.

The internal member 7 comprises a portion of solid cylindrical shape, or rather solid, or preferably and as illustrated in the figures, of an approximately tubular shape with a cylindrical wall in which supply ducts 19 for the pressurized fluid of are developed completely or in parts.

The external 3 and internal 7 members have respective longitudinal geometric axes and are interconnected by a set of interposed rotation members 11 of the sliding or rolling type, for example consisting of ball bearings or roller or needle bearings or bushings or brasses, having rotation axes R which, in the assembling condition of the device 1, coincide with the longitudinal geometric axes of the external 3 and internal 7 members.

Preferably and as illustrated in the figures, the device 1 comprises two rotation members 11 consisting of ball bearings each locked between the respective end side portions of the body of the external member 3 and of the tubular portion of the internal member 7.

The rotation members 11 allow free rotation around the rotation axis R of one of the members 7, 3 with respect to the other 3, 7. Preferably and as illustrated in the figures, the external member 3 is provided with a pair of transverse brackets 47 fixed to the lateral ends of the respective body and assigned for fixing to a support structure of the external member 3 which is therefore static while the internal member 7 is free to rotate axially; the invention alternatively provides that the internal member is locked and stationary and that the external member is freely rotatable.

The internal member 7 has a ring element 15 protruding outward from the median portion of the external face of its body. This ring element protrudes from said face for a length comprised between about one sixth and about one half of the minimum external diameter of the median portion of the internal member and has a constant thickness comprised between one fifth and the double of said protrusion. The ring element 15 can be locked to the median portion of the internal member 7 or preferably and as illustrated in the figures, it can be obtained in a single body with it and has side faces that make up its right and left flat shoulders in the shape of a circular crown.

In addition, the ring element 15 is peripherally provided with an annular groove 17 which in the assembled condition of the device faces the internal outlet of each first connection 5 obtained in the body of the external member 3.

The bottom of the annular groove 17 of the ring element 15 carries the outlets for the fluid of a plurality of radial portions, obtained in the thickness of the ring element 15 of said supply ducts 19 of the internal member 7; where the supply ducts 19 connect such annular groove 17 to a plurality of second connections 9 of the internal member 7 for the flow of said fluid.

Each right or left shoulder of the ring element 15 is in abutment with a first flat side face of a respective middle ring 21 whose second side face is also flat.

An outer edge of the second flat side face of said middle ring 21 slidably collides with a flat side face of a respective sealing ring 23 kept adherent against the middle ring 21 by an annular thrust element 25 acting against the portion of the sealing ring 23 opposite the middle ring 21; in other words, the annular thrust element 25 presses against the side face of the sealing ring 23 opposite to that which slides against the middle ring 21, thus the annular thrust element 25 pushes the sealing ring 23 against the middle ring 21 with a force directed towards the ring element 15 and this occurs both to the right and to the left of the latter 15.

The annular thrust element 25 comprises an annular seat member 31 having an "L" -shaped cross section whose concavity constitutes a concave seat 33 facing the respective side shoulder.

Such concave seat 33 of the annular seat member 31 is assigned to slide in an axial direction an annular pusher member 35 which abuts the sealing ring 23. Between the annular seat member 31 and the annular pusher member 35 there is an annular expansion chamber 37 in flow connection with a source of pressurized fluid. The pressurized fluid of the duct 39 can be the same as the first 5 and second 9 connections or it can be of different nature and origin. The pressure in the annular expansion chamber 37 pushes the annular pusher member 35 and the sealing ring 23 towards the respective middle ring 21. Preferably the duct 39 carried out in the external member 3 is in external flow connection with the first connection 5.

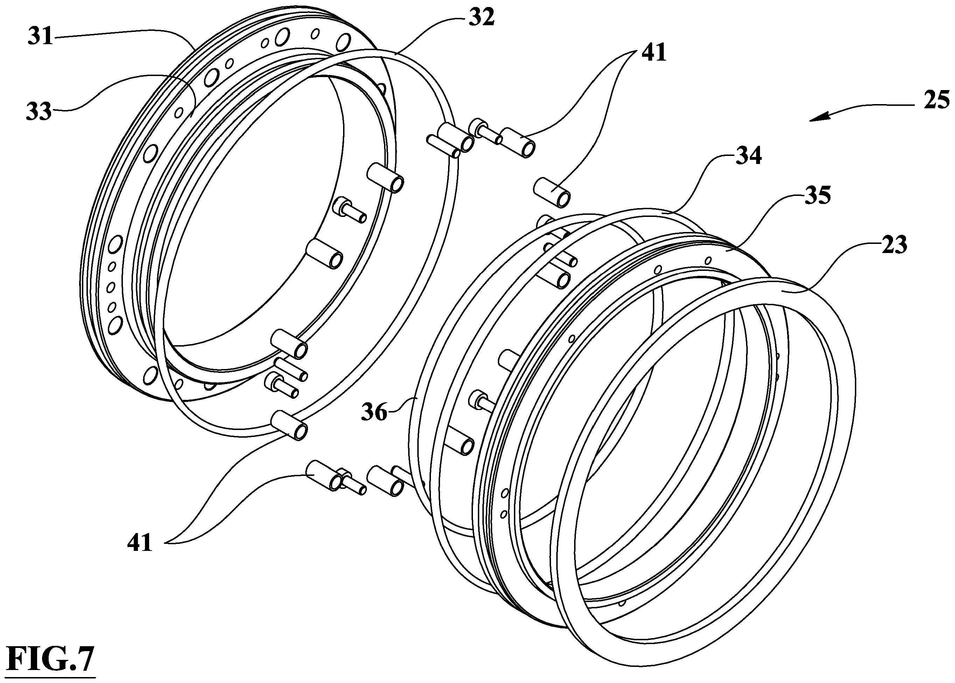

Alternatively, or preferably and as illustrated in the figures, in addition to the annular expansion chamber 37, the device 1 can comprise a set of elastic elements 41 interposed between the annular seat member 31 and the annular pusher member 35. The set of elastic elements 41 preferably comprises helical springs compressed between the annular seat member 31 and the annular pusher member 35 whose elastic force pushes the annular pusher member 35 and the sealing ring 23 towards the respective middle ring 21. Preferably the ends of each helical spring of the elastic elements 41 are housed in respective concave seats carried out in the mutually facing side portions of the annular seat member 31 and of the annular pusher member 35. As illustrated in figure 7, the annular thrust element 25 also comprises a set of screws for preloading the springs which mutually bind the annular seat member 31 and the annular pusher member 35 without blocking their mutual sliding in the axial direction which is guided by a set of sliding pins whose ends are slidably housed in respective seats carried out in the annular seat member 31 and in the annular pusher member 35. In case of maintenances, for example on the sealing rings 23 and/or on the middle ring 21, the two annular thrust elements 25 can be disassembled and reassembled in the device as a single piece, without the need to separate the annular seat member 31 from the annular pusher member 35 and to remove and reposition the elastic elements 41 which always remain in their respective seats.

Preferably, the annular expansion chamber 37 is in flow connection with the first connection 5 and cooperates with the elastic elements 41 to exert an abutment thrust force between the sealing ring 23, the middle ring 21 and the corresponding shoulder of the protruding ring element 15; such thrust force therefore has an almost constant elastic component and a pneumatic component proportional to the pressure in the first connection 5.

A first ring seal 20 is interposed between the first flat side face of each middle ring 21 and the respective side shoulder of the ring element 15; between the body of the external member 3, on one side, and the annular seat member 31 and the annular pusher member 35 on the other side, are interposed respective second ring seal 32 and third ring seal 34; a fourth ring seal 36 is interposed between the annular seat member 31 and the annular pusher member 35. These seals are of the O-Ring type or similar.

Each middle ring 21 is made of rectifiable anti-friction material, or which can be lapped, of the ceramic, metal, carbon or composite type, and each sealing ring 23 is made of highly hard metal material and having at least the side assigned to match with the respective intermediate ring, subjected to a high surface finish such as lapping or the like.

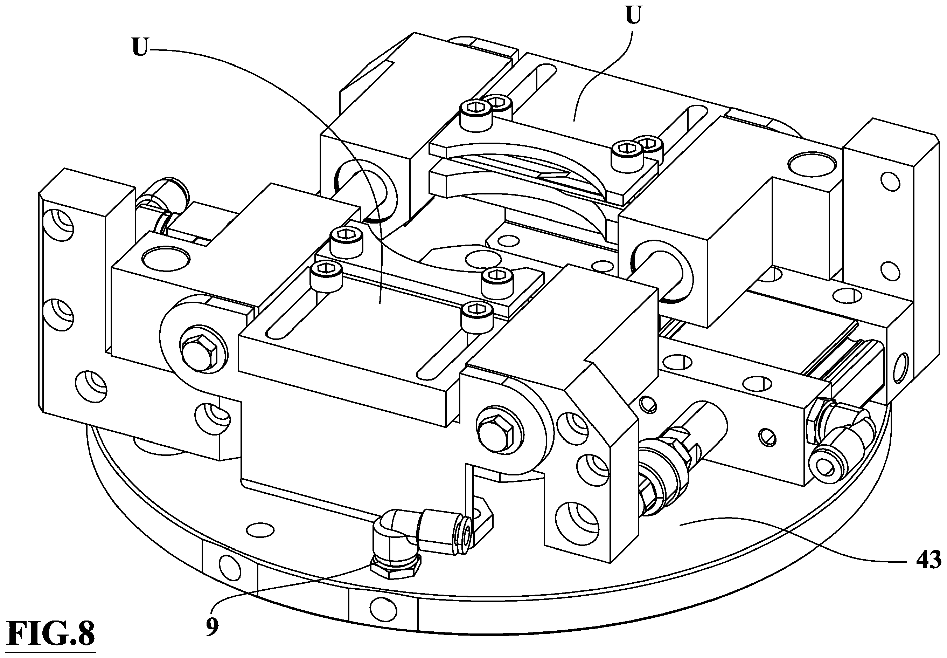

A first end of the internal member 7 protruding from the external member 3 carries a flange 43 perpendicular to the rotation axis R. Such flange 43 has the shape of an annulus with a central hole corresponding to said lumen. Each supply ducts 19 has radial sections at the ring element 15 and the flange 43 and at the tubular wall of the internal member 7 has longitudinal sections. The portions of the supply ducts 19 that develop in the flange 43 have one or more of said second connections 9 for feeding a set of tools U fixed to said flange 43 as illustrated by way of example in Figure 8.

The second end of the internal member 7 protruding from the external member 3 carries a gear or a crown or preferably a pulley 45, for example of the Poly-V type, in the shape of an annulus with a central hole corresponding to said lumen. The pulley 45 is assigned for a belt for connection to a rotation motor of the internal member 7 placed laterally so as not to interfere with the lumen which can be used for the passage of pipes to be cut by means of the blade-type tools U operated by the pressurized fluid or to the passage of rolls, cables and longitudinal elements in general to be processed using tools U of another type.

## Claims

1. Swivel joint device with sealed duct comprising at least one external member (3) provided with at least one respective first connection (5) for a pressurized fluid and one internal member (7) provided with at least one respective second connection (9) for the pressurized fluid where the internal member (7) is at least partially internal to the external member (3); said device (1) further comprises a set of rotation members (11), having a common rotation axis (R) and interposed between the internal (7) and external (3) members for free rotation around the rotation axis (R) of one of the members (7, 3) with respect to the other (3, 7); said device being **characterized in that** the internal member (7) has a ring element (15) protruding outwards and peripherally provided with an annular groove (17) facing the at least one internal outlet of the at least one first connection (5) of the external member (3), the ring element (15) is laterally provided with right and left annulus shoulders and its annular groove (17) is in fluid communication with a set of supply ducts (19) of the internal element (7) which connect such annular groove (17) to the at least one second connection (9) of the internal member (7); each right or left shoulder of the ring element (15) is in abutment with a first flat side face of a respective middle ring (21), the second side face of the middle ring (21) is also flat and an external edge thereof is in a sliding abutment with a side flat face of a respective sealing ring (23) kept adherent against the middle ring (21) by an annular thrust element (25) acting against the portion of the sealing ring (23) opposite the side face of the latter (23) which slides against the middle ring (21).

2. Device according to claim 1 **characterized in that** the annular thrust element (25) comprises an annular seat member (31) provided with a concave seat (33) facing the respective side shoulder and assigned to accommodate in a sliding manner in the axial direction an annular pusher member (35) which is an abutment with the sealing ring (23); between the annular seat member (31) and the annular pusher member (35) there is an annular expansion chamber (37) in fluid communication with a source of pressurized fluid and/or with the first connection (5) by means of at least a duct (39) made in the external member (3) where the pressure in the annular expansion chamber (37) pushes the annular pusher member (35) and the sealing ring (23) towards the respective middle ring (21).

3. Device according to claim 1 **characterized in that** the annular thrust element (25) comprises an annular seat member (31) provided with a concave seat (33) facing the respective side shoulder and assigned to house in a sliding manner in the axial direction an annular pusher member (35) which is an abutment with the sealing ring (23); between the annular seat member (31) and the annular pusher member (35) is interposed a set of elastic elements (41) whose elastic force pushes the annular pusher member (35) and the sealing ring (23) towards the respective middle ring (21).

4. Device according to claims 2 and 3 **characterized in that** the annular expansion chamber (37) is in fluid communication with the first connection (5) and cooperates with the elastic elements (41) to exert an abutment thrust between the sealing ring (23) and the corresponding shoulder of the protruding ring element (15) having an almost constant elastic component and a pneumatic component proportional to the pressure in the first connection (5).

5. Device according to claim 2 or 4 **characterized in that** a first ring seal (20) is interposed between the first flat side face of each middle ring (21) and the respective side shoulder of the ring element (15); between a body of the external member (3) and the annular seat member (31) a second ring seal (32) is interposed; between the body of the external member (3) and the annular pusher member (35) a third ring seals (34) is interposed; a fourth ring seal (36) is interposed between the annular seat member (31) and the annular pusher member (35); where these seals are of the O-Ring type or similar.

6. Device according to any one of the preceding claims, **characterized in that** each middle ring (21) is made of rectifiable metal material, **in that** each sealing ring (23) is made of high hardness metal material and having at least one side, assigned to match with the respective middle ring, subjected to a high surface finish such as lapping or the like, and **in that** the rotation members (11) comprise a set of ball bearings or roller or needle bearings or bushings or brasses.

7. Device according to any one of the preceding claims **characterized in that** the internal member (7) is of cylindrical tubular shape with a cylindrical internal passing lumen with a longitudinal geometric axis coinciding with the rotation axis (R).

8. Device according to claim 7 **characterized in that** a first end of the internal member (7) protruding from the external member carries a flange (43) perpendicular to the rotation axis (R) in the shape of an annulus with a central hole corresponding to said lumen, where each supply duct (19) has radial and longitudinal sections and also extends into the flange (43) where it carries one or more of the second connection (9) for feeding a set of tools (U) fixed to said flange (43).

9. Device according to claim 7 or 8 **characterized in that** a second end of the internal member (7) protruding from the external member (3) carries one between the gear, crown and pulley (45) in the shape of an annulus with a central hole corresponding to said lumen for connection to a rotation motor of the internal member (7).

10. Device according to any one of the preceding claims **characterized in that** the external member (3) is fixed to one or more transversal brackets (47) for fixing the external member (3) to a support structure.

## Patentansprüche

1. Drehgelenkvorrichtung mit abgedichtetem Kanal umfassend mindestens ein äußeres Element (3), das mit mindestens einer entsprechenden ersten Verbindung (5) für ein unter Druck stehendes Fluid versehen ist und ein inneres Element (7), das mit mindestens einer entsprechenden zweiten Verbindung (9) für das unter Druck stehende Fluid versehen ist, wobei das innere Element (7) zumindest teilweise im Inneren des äußeren Elements (3) liegt; die Vorrichtung (1) umfasst des Weiteren einen Satz Drehelemente (11), die eine gemeinsame Drehachse (R) aufweisen und zwischen dem inneren (7) und äußeren (3) Element angeordnet ist zur freien Drehung um die Drehachse (R) eines der Elemente (7, 3) bezogen auf das andere (3, 7); und die Vorrichtung ist **dadurch gekennzeichnet, dass** das innere Element (7) ein Ringelement (15) aufweist, das nach außen vorsteht und umfänglich mit einer Ringnut (17) versehen ist, die dem mindestens einen inneren Auslass der mindestens einen ersten Verbindung (5) des äußeren Elements (3) zugewandt ist, das Ringelement (15) ist seitlich mit rechten und linken kreisförmigen Schultern versehen und seine Ringnut (17) steht in Fluidverbindung mit einem Satz Förderkanälen (19) des inneren Elements (7), die eine solche Ringnut (17) mit der mindestens einen zweiten Verbindung (9) des inneren Elements (7) verbindet; jede rechte oder linke Schulter des Ringelements (15) liegt an einer ersten flachen Seite eines entsprechenden Mittelrings (21) an, die zweite Seitenfläche des Mittelrings (21) ist ebenfalls flach und ein äußerer Rand davon liegt gleitend an einer seitlichen flachen Fläche eines entsprechenden Dichtrings (23) an, der in haftender Weise gegen den Mittelring (21) durch ein ringförmiges Schubelement (25) gehalten wird, das gegen den Bereich des Dichtrings (23) gegenüber der Seitenfläche des Letztgenannten (23) wirkt, der gegen den Mittelring (21) gleitet.

2. Vorrichtung gemäß Anspruch 1, **dadurch gekennzeichnet, dass** das ringförmige Schubelement (25) ein ringförmiges Aufnahmeelement (31) umfasst, das mit einer konkaven Aufnahme (33) versehen ist, die der entsprechenden Seitenschulter zugewandt ist und zugeordnet ist, um ein ringförmiges Stoßelement (35) gleitend in der axialen Richtung unterzubringen, welches an dem Dichtring (23) anliegt; zwischen dem ringförmigen Aufnahmeelement (31) und dem ringförmigen Stoßelement (35) ist eine ringförmige Expansionskammer (37) vorhanden, die in Fluidverbindung mit einer Quelle von unter Druck stehendem Fluid und/oder mit der ersten Verbindung (5) mittels mindestens einem Kanal (39) steht, der in dem äußeren Element (3) ausgebildet ist, wo der Druck in der ringförmigen Expansionskammer (37) das ringförmige Stoßelement (35) und den Dichtring (23) hin zu dem entsprechenden Mittelring (21) stößt.

3. Vorrichtung gemäß Anspruch 1, **dadurch gekennzeichnet, dass** das ringförmige Schubelement (25) ein ringförmiges Aufnahmeelement (31) umfasst, das mit einer konkaven Aufnahme (33) versehen ist, die der entsprechenden Seitenschulter zugewandt ist und zugeordnet ist, um in der axialen Richtung ein ringförmiges Stoßelement (35) gleitend aufzunehmen, das an dem Dichtring (23) anliegt; zwischen dem ringförmigen Aufnahmeelement (31) und dem ringförmigen Stoßelement (35) ist ein Satz elastischer Elemente (41) angeordnet, deren elastische Kraft das ringförmige Stoßelement (35) und den Dichtring (23) hin zu dem entsprechenden Mittelring (21) stößt.

4. Vorrichtung gemäß den Ansprüchen 2 und 3, **dadurch gekennzeichnet, dass** die ringförmige Expansionskammer (37) in Fluidverbindung mit der ersten Verbindung (5) steht und mit den elastischen Elementen (41) zusammenarbeitet, um einen Anschlagstoß zwischen dem Dichtring (23) und der entsprechenden Schulter des vorstehenden Ringelements (15) auszuüben, das eine annähernd konstante elastische Komponente und eine pneumatische Komponente proportional zu dem Druck in der ersten Verbindung (5) aufweist.

5. Vorrichtung gemäß Anspruch 2 oder 4, **dadurch gekennzeichnet, dass** eine erste Ringdichtung (20) zwischen der ersten flachen Seitenfläche jedes Mittelrings (21) und der entsprechenden Seitenschulter des Ringelements (15) angeordnet ist; zwischen einem Körper des äußeren Elements (3) und des ringförmigen Aufnahmeelements (31) ist eine zweite Ringdichtung (32) angeordnet; zwischen dem Körper des äußeren Elements (3) und dem ringförmigen Stoßelement (35) ist eine dritte Ringdichtung (34) angeordnet; eine vierte Ringdichtung (36) ist zwischen dem ringförmigen Dichtelement (31) und dem ringförmigen Stoßelement (35) angeordnet; wobei diese Dichtungen O-Ring-förmig oder ähnlich ausgebildet sind.

6. Vorrichtung nach einem der vorhergehenden Ansprüche, **dadurch gekennzeichnet, dass** jeder Mittelring (21) aus einem rektifizierbaren Metallmaterial hergestellt ist, dadurch, dass jeder Dichtring (23) aus einem Metall mit hoher Materialhärte hergestellt ist und mindestens eine Seite aufweist, die zugeordnet ist, um zu dem entsprechenden Mittelring zu passen, der einem hohen Oberflächenfinish wie Läppen oder dergleichen unterzogen wird, und dadurch, dass die Rotationselemente (11) einen Satz Kugellager oder Rollen- oder Nadellager oder Buchsen oder Messing umfassen.

7. Vorrichtung nach einem der vorhergehenden Ansprüche, **dadurch gekennzeichnet, dass** das innere Element (7) zylinderrohrförmig ist mit einem zylindrischen inneren Durchgangslumen mit einer länglichen Geometrieachse übereinstimmend mit der Rotationsachse (R).

8. Vorrichtung nach Anspruch 7, **dadurch gekennzeichnet, dass** ein erstes Ende des inneren Elements (7), das von dem äußeren Element vorsteht, einen Flansch (43) senkrecht zu der Rotationsachse (R) in der Form eines Rings, mit einem dem Lumen entsprechenden zentralen Loch trägt, wobei jeder Zuführkanal (19) radiale und längliche Abschnitte aufweist und sich ebenso in den Flansch (43) erstreckt, wobei er ein oder mehr der zweiten Verbindungen (9) trägt, um einen Werkzeugsatz (U) zuzuführen, die an dem Flansch (43) befestigt sind. 3

9. Vorrichtung nach Anspruch 7 oder 8, **dadurch gekennzeichnet, dass** ein zweites Ende des inneren Elements (7), das von dem äußeren Element (3) vorsteht, eines der Folgenden trägt: Zahnrad, Krone und Riemenscheibe (45) in der Form eines Rings mit einem dem Lumen entsprechenden zentralen Loch, zum Verbinden mit einem Drehmotor des inneren Elements (7).

10. Vorrichtung nach einem der vorhergehenden Ansprüche, **dadurch gekennzeichnet, dass** das äu-βere Element (3) an einer oder mehr querverlaufenden Klammern (47) befestigt ist, um das äu-βere Element (3) an einer Trägerstruktur zu befestigen.

## Revendications

1. - Dispositif de raccord articulé avec conduit étanche, comprenant au moins un élément externe (3) comportant au moins un premier raccord respectif (5) pour un fluide mis sous pression et un élément interne (7) comportant au moins un second raccord respectif (9) pour le fluide mis sous pression, l'élément interne (7) étant au moins partiellement interne à l'élément externe (3) ; ledit dispositif (1) comprend en outre un ensemble d'éléments de rotation (11), ayant un axe de rotation commun (R) et interposés entre les éléments interne (7) et externe (3) pour une rotation libre autour de l'axe de rotation (R) de l'un des éléments (7, 3) par rapport à l'autre (3, 7) ; ledit dispositif étant **caractérisé par le fait que** l'élément interne (7) a un élément annulaire (15) faisant saillie vers l'extérieur et comportant en périphérie une rainure annulaire (17) faisant face à l'au moins une sortie interne de l'au moins un premier raccord (5) de l'élément externe (3), l'élément annulaire (15) comportant latéralement des épaulements annulaires droit et gauche et sa rainure annulaire (17) étant en communication fluidique avec un ensemble de conduits d'alimentation (19) de l'élément interne (7) qui relient cette rainure annulaire (17) à l'au moins un second raccord (9) de l'élément interne (7) ; chaque épaulement droit ou gauche de l'élément annulaire (15) est en butée avec une première face latérale plate d'une bague centrale respective (21), la seconde face latérale de la bague centrale (21) étant également plate et un bord externe de celle-ci étant en butée coulissante avec une face latérale plate d'une bague d'étanchéité respective (23) maintenue adhérente contre la bague centrale (21) par un élément de butée annulaire (25) agissant contre la partie de la bague d'étanchéité (23) opposée à la face latérale de cette dernière (23) qui coulisse contre la bague centrale (21).

2. - Dispositif selon la revendication 1, **caractérisé par le fait que** l'élément de butée annulaire (25) comprend un élément siège annulaire (31) comportant un siège concave (33) faisant face à l'épaulement latéral respectif et destiné à recevoir d'une manière coulissante dans la direction axiale un élément de poussée annulaire (35) qui est en butée avec la bague d'étanchéité (23) ; entre l'élément siège annulaire (31) et l'élément de poussée annulaire (35) se trouve une chambre d'extension annulaire (37) en communication fluidique avec une source de fluide mis sous pression et/ou avec le premier raccord (5) au moyen d'au moins un conduit (39) réalisé dans l'élément externe (3) où la pression dans la chambre d'extension annulaire (37) pousse l'élément de poussée annulaire (35) et la bague d'étanchéité (23) vers la bague centrale respective (21).

3. - Dispositif selon la revendication 1, **caractérisé par le fait que** l'élément de butée annulaire (25) comprend un élément siège annulaire (31) comportant un siège concave (33) faisant face à l'épaulement latéral respectif et destiné à recevoir d'une manière coulissante dans la direction axiale un élément de poussée annulaire (35) qui est en butée avec la bague d'étanchéité (23) ; entre l'élément siège annulaire (31) et l'élément de poussée annulaire (35) est interposé un ensemble d'éléments élastiques (41) dont la force élastique pousse l'élément de poussée annulaire (35) et la bague d'étanchéité (23) vers la bague centrale respective (21).

4. - Dispositif selon les revendications 2 et 3, **caractérisé par le fait que** la chambre d'extension annulaire (37) est en communication fluidique avec le premier raccord (5) et coopère avec les éléments élastiques (41) pour exercer une poussée de butée entre la bague d'étanchéité (23) et l'épaulement correspondant de l'élément annulaire en saillie (15) ayant une composante élastique quasi constante et une composante pneumatique proportionnelle à la pression dans le premier raccord (5).

5. - Dispositif selon la revendication 2 ou 4, **caractérisé par le fait qu'**un premier joint annulaire (20) est interposé entre la première face latérale plate de chaque bague centrale (21) et l'épaulement latéral respectif de l'élément annulaire (15) ; entre un corps de l'élément externe (3) et l'élément siège annulaire (31) est interposé un deuxième joint annulaire (32) ; entre le corps de l'élément externe (3) et l'élément de poussée annulaire (35) est interposé un troisième joint annulaire (34) ; un quatrième joint annulaire (36) est interposé entre l'élément siège annulaire (31) et l'élément de poussée annulaire (35) ; ces joints étant du type joint torique ou analogue.

6. - Dispositif selon l'une quelconque des revendications précédentes, **caractérisé par le fait que** chaque bague centrale (21) est faite de matériau métallique rectifiable, **par le fait que** chaque bague d'étanchéité (23) est faite de matériau métallique de haute dureté et ayant au moins un côté, destiné à être mis en correspondance avec la bague centrale respective, soumis à une finition de surface élevée telle qu'un rodage ou analogue, et **par le fait que** les éléments de rotation (11) comprennent un ensemble de roulements à billes ou de roulements à rouleaux ou à aiguilles ou de chemises ou de douilles.

7. - Dispositif selon l'une quelconque des revendications précédentes, **caractérisé par le fait que** l'élément interne (7) est de forme tubulaire cylindrique avec une lumière de passage interne cylindrique dont un axe géométrique longitudinal coïncide avec l'axe de rotation (R) .

8. - Dispositif selon la revendication 7, **caractérisé par le fait qu'**une première extrémité de l'élément interne (7) faisant saillie à partir de l'élément externe porte une bride (43) perpendiculaire à l'axe de rotation (R) sous la forme d'un anneau avec un trou central correspondant à ladite lumière, chaque conduit d'alimentation (19) ayant des sections radiales et longitudinales et s'étendant également dans la bride (43) où il porte un ou plusieurs du second raccord (9) pour acheminer un ensemble d'outils (U) fixés à ladite bride (43) .

9. - Dispositif selon la revendication 7 ou 8, **caractérisé par le fait qu'**une seconde extrémité de l'élément interne (7) faisant saillie à partir de l'élément externe (3) porte l'un parmi l'engrenage, la couronne et la poulie (45) sous la forme d'un anneau avec un trou central correspondant à ladite lumière pour une liaison à un moteur de rotation de l'élément interne (7).

10. - Dispositif selon l'une quelconque des revendications précédentes, **caractérisé par le fait que** l'élément externe (3) est fixé à un ou plusieurs supports transversaux (47) pour fixer l'élément externe (3) à une structure de support.
